# EUROPÄISCHE PATENTSCHRIFT

(11) **EP 1 882 641 B1**
(45) Veröffentlichungstag und Bekanntmachung des Hinweises auf die Patenterteilung: **09.09.2009**
(21) Anmeldenummer: 07014735.0
(22) Anmeldetag: 27.07.2007
(51) Int. Cl.: B65D 19/00

(54) **Transportpalette**
Transport pallet
Palette de transport

(30) Priorität: 28.07.2006 DE 102006035692
(43) Veröffentlichungstag der Anmeldung: 30.01.2008
(73) Patentinhaber: Meskendahl, Dieter, 42477 Radevormwald (DE)
(72) Erfinder: Meskendahl, Dieter, 42477 Radevormwald (DE)
(74) Vertreter: Demski, Siegfried

(56) Entgegenhaltungen:
- EP-A1- 0 596 146
- WO-A-91/13810
- WO-A-95/21093
- DE-A1- 4 139 016
- US-B1- 6 938 558

## Beschreibung

Die Erfindung betrifft eine Transportpalette, bestehend aus Längs- und Quergurten, welche nahezu rechtwinklig zueinander angeordnet sind, wobei die Längsgurte in Ausnehmungen der Quergurte einliegen und die Längs- und Quergurte in Aussparungen der Stützfüße aufgenommen sind oder auf den Stützfüßen aufliegen.

Zum Transport von Waren und Gütern im internationalen Logistikbereich haben sich Paletten durchgesetzt, die einem einheitlichen Standard folgen. Der einheitliche Standard bezieht sich auf die Abmessungen der Palette und auf die Tragfähigkeit der Palette, auf denen die Waren oder die Güter transportiert werden. Die Palette ermöglicht dabei die Aufnahme des zu transportierenden Guts mit einem Gabelstapler, Handkarren oder sogenannten Ameisen, sodass die Waren problemlos transportiert und bewegt werden können. Die Menge der zu transportierenden Güter und die Größe der zu transportierenden Einheit im internationalen Warenverkehr bestimmt die Anzahl der im Verkehr befindlichen Transportpaletten. Die Trahsportpaletten werden im internationalen Warenverkehr wiederverwendet und durchlaufen einen Kreislauf. Dabei ist es möglich, dass Transportpaletten von einem Unternehmen in größerer Anzahl empfangen werden, als das Unternehmen in den Kreislauf zurück führt und andere Unternehmen führen mehr Transportpaletten aus dem Unternehmen heraus, als in das Unternehmen hereinkommen. Hierzu existiert eine Palettenlogistik, die dafür Sorge trägt, dass jedes Unternehmen die Anzahl von Paletten zur Verfügung hat, die es benötigt. Aber nicht nur die Verfügbarkeit, sondern auch andere Parameter sind bei der Palettenlogistik wichtig. Neben der reinen Verfügbarkeit ist es notwendig, dass die Paletten bestimmte Anforderungen an Qualität, Tragfähigkeit, Hygiene und Materialkompatibilität aufweisen. Darüber hinaus ist es in der Palettenlogistik auch notwendig, für Stoßzeiten eine höhere Anzahl der Paletten vorzuhalten, damit diese bei Bedarf in ausreichenden Maße zur Verfügung stehen.

Die bekannten Paletten aus dem Stand der Technik, nämlich solche, die aus Holzleisten gefertigt werden, erfüllen diese Aufforderungen nicht. Die gattungsgemäßen Transportpaletten werden aus Holz gefertigt und sind insofern nicht resourcenschonend. Des Weiteren haben die aus Holz gefertigten Paletten ein hohes Eigengewicht, wodurch der Transport der Paletten erschwert wird. Ein weiterer Nachteil besteht darin, dass diese im Wesentlichen quaderförmig geformt sind und insofern eine für den Transport instabile Lagerfähigkeit aufweisen und ein großes Raumvolumen beanspruchen.

Die WO 95/21093 A offenbart eine Transportpalette, welche ausschließlich aus extrudierten Kunststoffprofilen hergestellt wird. Die Besonderheit bei dieser Palette besteht darin, dass ein durchgehender Querträger die Verbindung zwischen den aufliegenden Profilen bewirkt und gleichzeitig als Stützfuß Verwendung findet. An diesen Querträger werden untere Längsgurte und obere Längsgurte befestigt, wobei die Befestigungsart durch Zapfen und Bohrungen im Wesentlichen vorgegeben ist.

Aus dem US-Patent 6,938,558 B1, ist eine Transportpalette bekannt, bei der in Längsrichtung angeordnete Profile eingesetzt werden, die lediglich im oberen Bereich mit Querprofilen abgedeckt werden. Auch bei dieser Ausführungsvariante sind Längsprofile zum Verbinden der Quergurte vorgesehen, die gleichzeitig als Stützelemente dienen, sodass im unteren Bereich keine Längs- oder Quergurte erforderlich sind.

Aus der DE 41 39 016 A1 ist eine stapelbare Palette bekannt, die unter Verwendung von Längs- und Quergurten mit Aussparungen versehen ist, in die hinein topfförmige Stützelemente eingesetzt werden, die zudem durch entsprechende Flanschkragen einklemmbar gestaltet sind.

Aus der EP 0 596 1456 A1 ist eine Transportpalette bekannt, welche als Vierweg-Blechpalette bezeichnet wird und demzufolge auch aus einer Vielzahl von Tragholkörpern und Querschienen gebildet ist, wobei diese aus Blech gefertigt werden sollen.

Aus der WO 91/13810 ist eine Transportpalette bekannt, bei der Stützfüße aus Kunststoff verwendet werden, welche flache Kunststoffpaneelen aufweisen, die rechtwinklig zueinander angeordnet sind und sich im oberen und unteren Bereich der Stützfüße befinden. Sämtliche bekannten Paletten verwenden Materialien, welche entweder aufwändig hergestellt oder nicht als umweltschonend zur betrachten sind.

Aufgabe der Erfindung ist es daher, eine Palette zur Verfügung zu stellen, welche in größeren Stückzahlen kostengünstig herzustellen ist und umweltschonende Materialien verwendet.

Die erfindungsgemäße Aufgabe wird dadurch gelöst, dass zumindest einige Längs- und Quergurte aus gepressten und/oder gerollten Pappprofilen bestehen. Weitere vorteilhafte Ausgestaltungen der erfindungsgemäßen Transportpalette ergeben sich aus den Merkmalen der Unteransprüche.

Dadurch, dass zumindest einige Gurte aus gepressten und/oder gerollten Pappprofilen hergestellt sind, ist es möglich, die Gurte mit einem geringeren Volumen zu fertigen, wodurch Gewichtseinsparungen möglich sind. Gerade die Gewichtseinsparung ermöglicht eine erleichterte Palettenlogistik, bei der Paletten in größerer Anzahl über größere Strecken transportiert werden können.

Eine Walze wird zum Pressen oder Rollen der Profile verwendet.

Hierbei kann auf Altpapier beziehungsweise Altpappe als Herstellungsmaterial zurück gegriffen werden, wobei diese Materialien günstig zu erwerben sind, was sich auf die Produktionskosten für die Transportpalette auswirkt.

In einer bevorzugten Ausführungsform sind die Pappprofile mit einer Kunststoffbeschichtung versehen, um beispielweise das Eindringen von Wasser oder das Eindringen von Chemikalien zu verhindern. Dabei ist es möglich, die Pappprofile aus recycelten Materialien aber auch aus neuen Materialien herzustellen, je nachdem, welche hygienischen Anforderungen an die Palette gestellt werden. Darüber hinaus ist vorgesehen, dass die Profile stapelbar ausgebildet sind. Dies bedeutet, dass die Einzelteile zur Herstellung einer erfindungsgemäßen Transportpalette raumfüllend und platzsparend transportiert werden können, sodass die Logistik der Einzelteile kostengünstig vorgenommen und ein Zusammenbau der Paletten vor Ort erfolgen kann.

Die Form der gewählten Gurte kann hierbei halbkreisförmig, dreieckförmig, trapezförmig oder mehrfach abgewinkelt ausgeführt werden. Sämtliche der vorgenannten Profilformen können durch einfache Bearbeitung aus den zu verwendeten Materialien hergestellt werden, wobei eine Reihe dieser Gurte zusätzlich stapelbar ausgeführt ist. In einer speziellen Ausbildung für die Obergurte ist vorgesehen, dass diese trapezoidal ausgebildet sind, wobei die Schenkelenden nach innen abgewinkelt parallel zueinander zu liegen kommen können, sodass eine erhebliche Verstärkung des Profiles eintritt und somit infolge der höheren Steifigkeit höhere Lasten aufnehmbar sind. Für die Obergurte kann demgegenüber vorzugsweise eine trapezförmige Ausführung gewählt werden oder alternativ eine W-förmige Ausführung bei der ebenfalls eine Verstärkung des Profils vorliegt, um eine höhere Belastung aufnehmen zu können. Die Untergurte wiederum können trapezförmig oder mehrfach abgewinkelt oder gegebenenfalls halbrund ausgeführt sein und werden in die vorhandene Ausnehmung der Stützfüße eingesetzt, wobei vorzugsweise eine Passform gewählt wird, sodass die Untergurte gegebenenfalls ohne Kleber einklemmend in den Stützfüßen aufgenommen sind.

In einer bevorzugten Ausführungsform sind die Profile beziehungsweise Gurte in zwei Vorzugsrichtungen ausgerichtet und die beiden Vorzugsrichtungen sind nahezu rechtwinklig zueinander angeordnet. Es gibt eine Vielzahl unterschiedlicher Gurtanordnungen, die zu einer formstabilen und hochbelastbaren Palette führen. Durch die nahezu ausschließliche senkrechte Anordnung der einzelnen Profile beziehungsweise Gurte ist es möglich, einen Gurt zur Verfügung zu stellen, welcher in unterschiedlichen Ausrichtungen stapelbar ist, ohne dass gegebenenfalls diagonale Streben, Profile oder Gurte in einer Ausrichtung der Palette auf eine weitere stoßen und so die Stapelbarkeit verhindern, sodass diese in beliebiger Ausrichtung stapelbar in einander fügbar sind. Durch die senkrechte Anordnung der Gurte ergibt sich insbesondere eine formschlüssige Stapelbarkeit, was der Transportlogistik entgegen kommt, um so Raum beim Transport zu sparen. Darüber hinaus können die gefertigten Profile in großer Stückzahl unproblematisch transportiert werden und brauchen vor Ort nur noch zusammengefügt zu werden.

In einer bevorzugten Ausführungsform der vorliegenden erfindungsgemäßen Transportpalette liegen die in einer Vorzugsrichtung verlaufenden Gurte in korrespondierenden Ausnehmungen der senkrecht hierzu angeordneten Gurte ein. Hierdurch kann im Gegensatz zu den gattungsgemäßen Transportpaletten, in welchen Holzlatten auf Holzklötzen angeordnet werden und dadurch eine Palette bilden, deren Oberfläche durch die angeordneten Holzlatten gewellt ist. Demgegenüber führt die erfindungsgemäße Transportpalette zu einer besonderes ebenen und belastbaren Palette. Durch das Ineinanderliegen der Gurte, wobei das Ineinanderliegen der Gurte durch einen Formschluss der einzelnen Gurtteile erreicht wird, ist auch eine besonders materialsparende Herstellung der erfindungsgemäßen Transportpalette erreichbar.

Zur Erreichung einer erhöhten Stabilität sind die Stützfüße mindestens an einer Stirnfläche vorzugsweise in beiden Stirnflächen mit zumindest einer Aussparung versehen. In diese Aussparung greifen die Gurtteile ein, sodass der Stützfuß das Profil für die Transportpalette formschlüssig umgreift und somit verdrehsicher und auch sicher gegenüber Verschiebung in der Ebene der Transportpalette aufgenommen ist. Durch diese Anordnung der in einander verzahnten Einzelteile der Transportpalette wird ein besonders stabiler Aufbau erreicht, der wiederum dazu führt, dass auf weiteres Stützmaterial zur Herstellung der Transportpalette verzichtet werden kann, wobei dennoch eine besonders leichte, aber belastbare Transportpalette entsteht.

In besonderer Ausführungsform weisen die Stützfüße in der unteren Stirnfläche eine Aussparung auf, in welcher die Gurte vollständig bündig aufgenommen sind, während in der oberen Stirnfläche eine Aussparung vorhanden ist, die nur einen Teil der Profilhöhe aufnimmt. Durch die Wahl der Aussparungen ist es möglich, dass die untere Stirnfläche den die Stützfüße verbindenden Gurt vollkommen aufnimmt, ohne das dieser Gurt das Gewicht der Palette tragen muss, weil die Stützfüße den unteren Gurt übergreifen und somit das gesamte Gewicht der Transportpalette auf die Grundfläche übertragen. Somit ist es möglich, dass die Gurte, die von dem Stützfuß vollständig umschlossen sind, nur eine Stützfunktion für die Stützfüße gegen ein Verrutschen oder ein Abknicken entstehen lassen.

In der oberen Stirnfläche hingegen werden die Gurte nur zum Teil aufgenommen, damit es möglich ist, durch einen Quergurt die oberen Längsgurte, im folgenden Obergurt, zu unterstützen, wobei die Kraft des Gewichtes auf der Transportpalette nicht durch die einzelnen Stützfüße abgeleitet werden soll, sondern die Kraft soll durch die Obergurte, die direkt unterhalb der Nutzfläche der Transportpalette angeordnet sind, auf die einzelnen Stützfüße verteilt werden.

In besonderer Ausführungsform der Erfindung weisen die Stützfüße in der oberen Stirnfläche eine Aussparung mit zumindest einem stehen gebliebenem Zapfen auf.

Diese stehen gebliebenen Zapfen dienen zur Verrastung des Stützfußes in dem Gurt, sodass eine kraftschlüssige Verbindung des Stützfußes mit den Gurten entsteht.

Korrespondierend zu den stehen gebliebenen Zapfen der Stützfüße weisen die Gurte seitlich zu den Ausnehmungen versetzt liegende Durchbrüche auf, in die die Stützfüße mit Ihren Zapfen greifen und somit eine kraftschlüssige Verbindung ausbilden, die zu einer erhöhten Stabilität der Transportpalette führt.

In einer konkreten Ausführungsform der erfindungsgemäßen Transportpalette liegen die Zapfen in den korrespondierenden Durchbrüchen in den nach dem Zusammenfügen gekreuzten Gurten ein. Somit unterstützen die Stützfüße die Kreuzungspunkte zweier Gurte direkt unterhalb der Nutzfläche der Transportpalette, wohin die meisten Kraftanteile des auf der Transportpalette zu liegenkommenden Guts geleitet werden.

In einer bevorzugten Ausführungsform der erfindungsgemäßen Transportpalette weisen die Gurte im Querschnitt eine Halbkreis-, Dreieck-, Rechteck- oder Trapezform auf. Diese Profilquerschnitte erlauben eine kostengünstige und materialsparende Bauweise, wobei die Belastung, die die Transportpalette durch die Querschnittsform aufnehmen kann, nicht gegenüber einer massiven Bauweise eingeschränkt wird.

Dabei sind die Aussparungen in den Stützfüßen und in den Quergurten an den Querschnitt der einliegenden Gurte angepasst, damit die Kraftverteilung auf die Gurte in einer Weise geschieht, dass die Gurte eine hohe Belastung aufnehmen können. Ebenso sind die Ausnehmungen der Quergurte ebenfalls mit stehen gebliebenen Zapfen ausgestattet, welche in korrespondierende Durchbrüche der senkrecht angeordneten Obergurte eingreifen.

Die erfindungsgemäße Transportpalette besteht in einer bevorzugten Ausführungsform aus einer oberen Nutzfläche, unter der drei Obergurte in Längsrichtung angeordnet sind, die mit ihrer konkaven Seite auf der unteren Seite der Nutzfläche aufliegen. Diese drei Obergurte werden sodann an drei Stellen mit drei Quergurten mit einander verbunden, wobei die Quergurte eine gleiche oder eine ähnliche Profilform aufweisen wie die Obergurte. Da jedoch die Quergurte die Obergurte umgreifen, sind Ausnehmungen in den Quergurten vorgesehen, welche exakt dem Außenprofil der Obergurte entsprechen und so stabilisieren die drei Quergurte eine Durchbiegung der Transportpalette mit einem Radius in Längsrichtung. An den Kreuzungsflächen der Gurte sind die Stützfüße angeordnet, wobei in der bevorzugten Ausführungsform der erfindungsgemäßen Transportpalette insgesamt neun Kreuzungspunkte aus drei Ober- und drei Quergurten entstehen. Die Stützfüße sind hierbei aus Papphülsenabschnitten oder aus Profilen gebildet, welche die unteren Quergurte an den Kreuzungspunkten teilweise umgreifen und weisen zu ihrer Unterseite eine Aussparung auf, durch die abermals drei Untergurte geschoben werden. Dabei ist vorgesehen, dass die Stützfüße das gesamte Gewicht der Transportpalette auf den Untergrund übertragen und die Untergurte sind dazu gedacht, die einzelnen Stützfüße in ihrer Position gegenüber Scherkräften zu stabilisieren.

In einer weiteren konkreten Ausführungsform liegt wenigstens ein Profil in Form eines Untergurts in den Aussparungen der unteren Stirnfläche der Stützfüße ein, während wenigstens ein Profil in Form eines Quergurtes in der Aussparung der oberen Stirnfläche des Stützfußes einliegt und wenigstens ein weiteres hierzu rechtwinklig angeordnetes Profil ist in Form eines Obergurtes in den Ausnehmungen der Quergurte aufgenommen. Dabei hat der Untergurt die Funktion der Stabilisierung der Stützfüße gegenüber Scherkräften. Die Quergurte haben die Funktion, eine Krümmung der Transportpalette mit einem längsverlaufenden Radius zu verhindern und die Obergurte haben die Aufgabe, eine Durchbiegung der Palette mit einem Radius quer zur Palettenrichtung zu verhindern.

Um auftretende Scherkräfte besser aufnehmen zu können, sind einerseits in den Ausnehmungen der Stützfüße Zapfen ausgebildet, welche in korrespondierende Ausnehmungen der Quergurte eingreifen und/oder andererseits sind in den Ausnehmungen der Quergurte ebenfalls Zapfen ausgebildet, welche in weiteren Ausnehmungen der Obergurte aufgenommen sind. Hierdurch wird ein erheblicher Widerstand gegenüber auftretenden Scherkräften erzielt.

In einer bevorzugten Ausführungsform haben die Gurte hierbei zumindest teilweise in einer Ebene ausgerichtete Schenkelenden. Durch die in einer Ebene ausgerichtete Schenkelenden ist es möglich, mehrere Paletten neben einander zu stellen, wobei die Paletten nicht mit der vergleichsweise dünnen Nutzfläche, welche die Nutzlast trägt, an einander stoßen, sondern durch die etwas robusteren Kanten der Profile an einander stoßen. Dabei nehmen die Profile die seitlichen Stöße auf, die verschiedene Paletten auf einander ausüben, und es wird verhindert, dass die Nutzfläche durch seitliche Schläge beschädigt wird, sodass hierdurch die Verwendbarkeit der Palette nach mehrfacher Benutzung nicht eingeschränkt ist.

Die Erfindung wird im Weiteren anhand der Figuren näher erläutert.

Es zeigt
- Fig. 1: eine erfindungsgemäße Transportpalette in perspektivischer Ansicht mit teilweise durchsichtig skizzierten Einzelelementen,
- Fig. 2: die Einzelteile der erfindungsgemäßen Transportpalette gemäß Figur 1,
- Fig. 3: die Einzelteile einer weiteren erfindungsgemäßen Transportpalette,
- Fig. 4: eine Profilanordnung im Querschnitt für die Untergurte, Obergurte und Quergurte und
- Fig. 5: eine alternative Ausführungsform der Profile für die Obergurte und Quergurte.

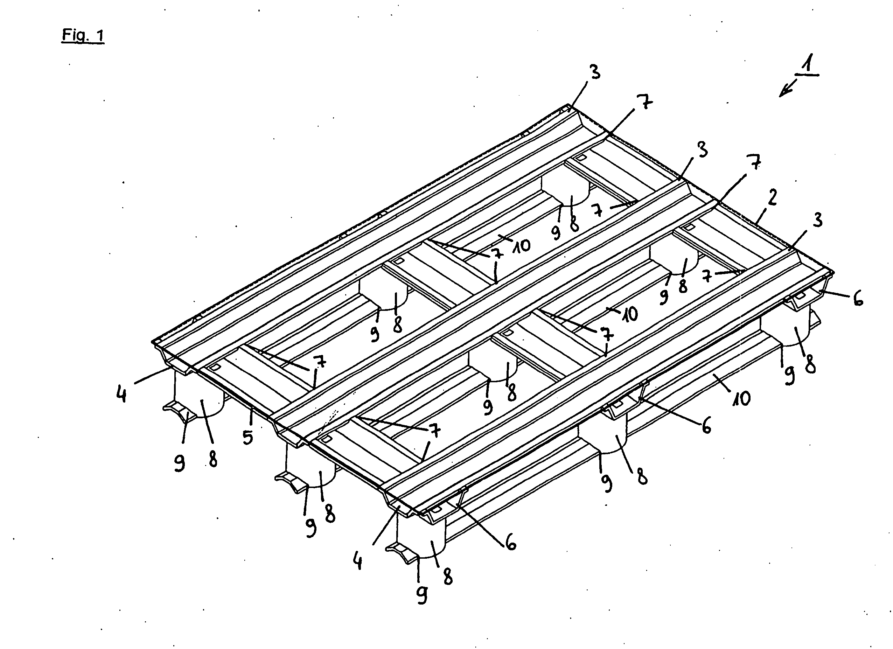

In Figur 1 ist eine erfindungsgemäße Transportpalette 1 mit teilweise durchsichtig skizzierten Einzelelementen dargestellt. Die Transportpalette 1 besteht aus einer oberen Nutzfläche 2, die zum besseren Verständnis des Aufbaus der Transportpalette 1 durchsichtig dargestellt ist. Die obere Nutzfläche 2 liegt auf drei Obergurten 3 auf, welche an der Unterseite 5 der Nutzfläche 2 anliegen und mit ihrer konkaven Seite 4 in den Ausnehmungen 7 der Quergurte 6 einliegen. Die drei Obergurte 3 verhindern ein Durchbiegen der Transportpalette 1 mit einem Radius quer zur Längsrichtung der Transportpalette 1. Die drei Obergurte 3 sind durch drei weitere Quergurte 6 mit einander verbunden, wobei die Quergurte 6 die Obergurte 3 umgreifen, in dem in die Quergurte 6 Ausnehmungen 7 eingearbeitet sind, die an die Form des Profils der Obergurte 3 angepasst sind. Unter den Kreuzungspunkten der Quergurte 6 mit den Obergurten 3 sind Stützfüße 8 angeordnet, welche die einwirkende Last auf der oberen Nutzfläche 2 auf den Untergrund übertragen.

Aus Figur 1 ist im Detail nicht erkennbar, wie die Stützfüße 8 in ihrer oberen und unteren Stirnfläche geformt sind. Aus dieser Figur ist lediglich erkennbar, dass die Stützfüße 8 die Quergurte 6 umgreifen, wobei die stehen gebliebenen Zapfen 12 in der Aussparung auf der oberen Stirnfläche der Stützfüße 8 in korrespondierende Durchbrüche 11 der unteren Quergurte 6 eingreifen und so die Stützfüße 8 im Kreuzungspunkt der Quergurte 6 und der Obergurte 3 zusätzlich unterstützenDemgegenüber ist in der unteren Stirnfläche der Stützfüße 8 ebenfalls eine Aussparung eingearbeitet, welche zur Aufnahme der Untergurte 10 vorgesehen ist, sodass die Untergurte 10 in den Stützfüßen 8 vollständig aufgenommen sind und nicht von der Last, die auf die obere Nutzfläche einwirkt, belastet werden. Die Kraft durch die Nutzlast wird dabei allein durch die Stützfüße 8 über die obere Nutzfläche 2, die Ober- 6 und Quergurte 3 auf den Untergrund übertragen.

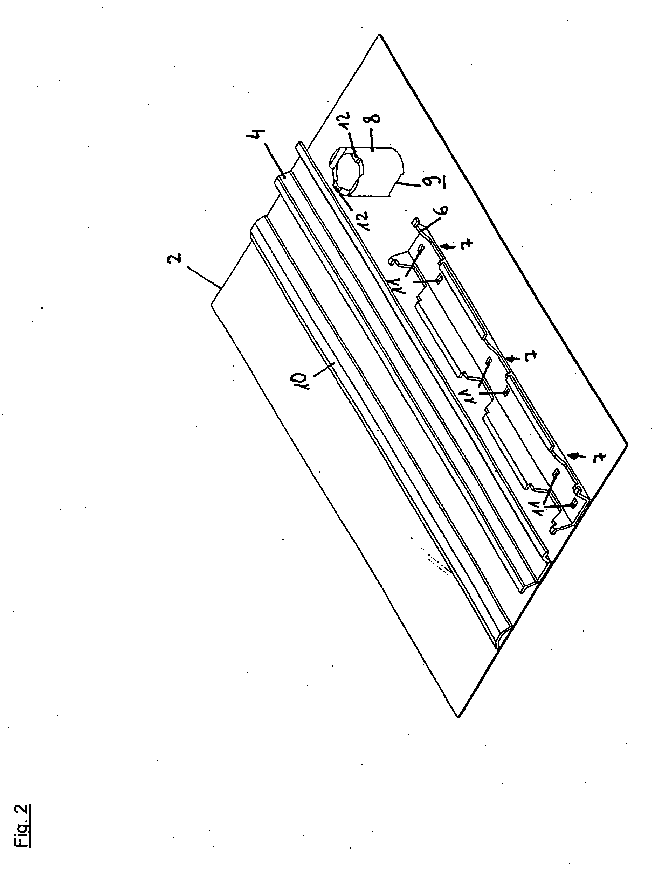

In Figur 2 sind die Einzelteile der erfindungsgemäßen Transportpalette 1 gemäß Figur 1 dargestellt. Dabei liegen auf einer Nutzfläche 2 eine Auswahl von Elementen, aus der die erfindungsgemäße Transportpalette 1 besteht. Die Einzelteile sind ein Obergurt 3, ein Quergurt 6, ein Stützfuß 8 und ein Untergurt 10. Deutlich ist in dem Quergurt 6 zu erkennen, dass Ausnehmungen 7 eingearbeitet sind, wobei die Quergurte 6 weitere Durchbrüche 11 aufweisen, in die stehen gebliebende Zapfen 12 auf der oberen Stirnseite der Stützfüße 8 eingreifen. Auf der unteren Stirnseite der Stützfüße 8 ist eine Aussparung 9 eingearbeitet, welche an das Außenprofil des Untergurtes 10 angepasst ist und somit übergreift der Stützfuß 8 im zusammengefügten Zustand der Transportpalette 1 den Untergurt 10, sodass die Last auf der Nutzfläche 2 nicht auf dem Untergurt 10 zu liegen kommt. Darüber hinaus ist erkennbar, dass die Untergurte 10 aus einem wesentlich schmaleren Profil bestehen, welches mit keinerlei Ausnehmungen und Ausstanzungen versehen ist, während die Obergurte 3 und Quergurte 6 eine identische Profilstruktur aufweisen und insbesondere die Quergurte 6 mit Ausnehmungen 11 versehen sind, in die die Obergurte 3 aufgenommen werden. Darüber hinaus wird durch die spätere Anordnung der Obergurte 3 und Quergurte 6 ersichtlich, dass die Zapfen 12 der Stützfüße 8 in die Ausnehmungen 11 eingreifen und somit einen Verdrehschutz bilden beziehungsweise auftretende Scherkräfte bei unsachgemäßer Beanspruchung der Transportpalette 1 aufnehmen können.

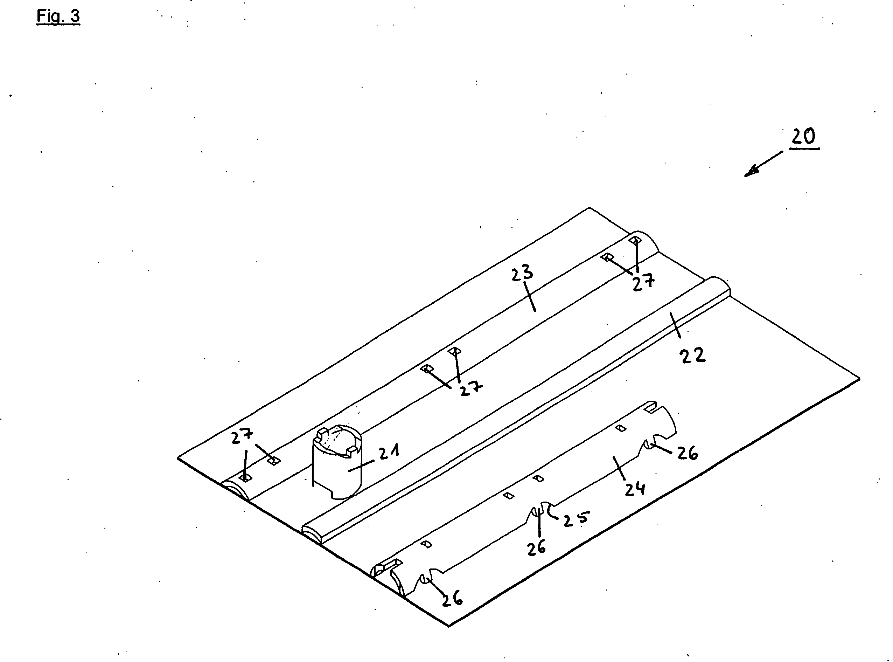

Figur 3 zeigt die Einzelteile einer weiteren erfindungsgemäßen Transportpalette 20, die ebenfalls aus Stützfüßen 21 und Untergurten 22 sowie Obergurten 23 und Quergurten 24 besteht. Gegenüber der Transportpalette 1 sind in den Ausnehmungen 25 der Quergurte 24 Zapfen 26 stehen geblieben, die in entsprechende Ausnehmungen 27 der Obergurte 24 nach der Montage eingreifen. Hierdurch wird sichergestellt, dass ein doppelter Verdrehschutz vorliegt, und zwar einerseits der Stützfüße 21 gegenüber den Quergurten 24 und andererseits die Quergurte 24 gegenüber den Obergurten 23, sodass die Stabilität der Transportpalette 20 weiterhin wesentlich erhöht wird. Darüber hinaus können Scherkräfte wirkungsvoll durch die stehen gebliebenen Zapfen 12, 26 aufgenommen werden und führen zu einer erhöhten Scherfestigkeit.

Der besondere Vorteil dieser erfindungsgemäßen Ausführungen besteht darin, dass aus einfachen und wenigen Einzelelementen eine äußerst stabile Transportpalette 1, 20 gefertigt werden kann, wobei die Einzelelemente zum größten Teil aus recyclingfähigen Materialien bestehen. Ein weiterer besonderer Vorteil der vorliegenden Erfindung ist darin zu sehen, dass aufgrund der vorgegebenen Profilstruktur die Profile in sich stapelbar ausgeführt sind und somit wesentlich leichter transportiert werden können und das Transportvolumen vor der Montage erheblich reduziert ist. In besonderen Fällen brauchen die Einzelteile lediglich an den zu verarbeitenden Ort gebracht werden, sodass vor Ort die Transportpalette 1, 20 aus den wenigen Einzelteilen mit entsprechenden Klebemitteln hergestellt werden können. Durch diese erfindungsgemäße Ausführungsform einer Transportpalette 1, 20 wird somit die Logistik wesentlich vereinfacht und führt darüber hinaus zu einem recourcenschonenden Produkt, welches vielseitig einsetzbar ist.

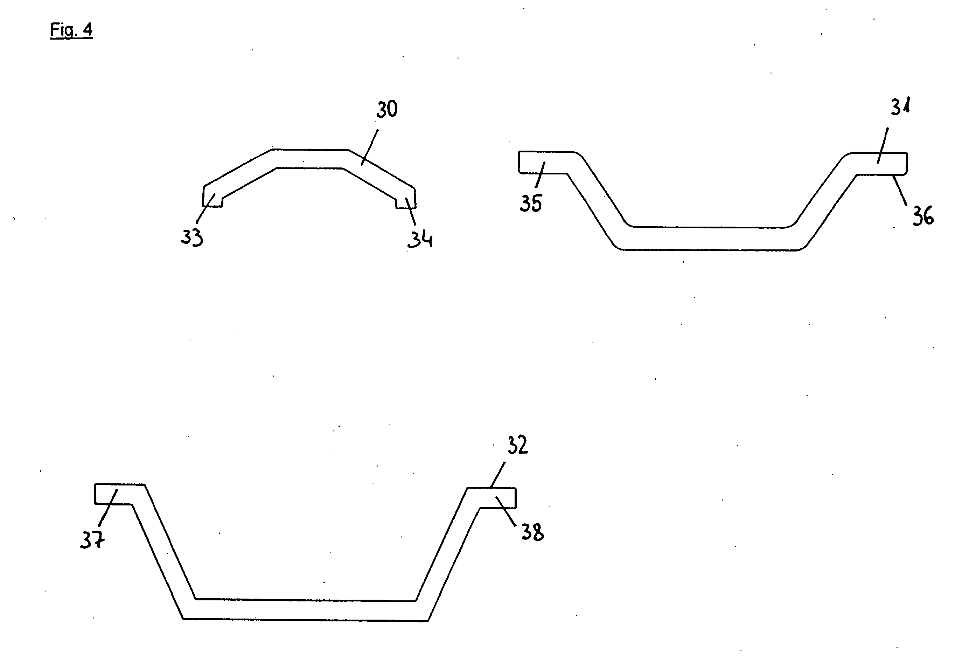

Figur 4 zeigt verschiedene Profilausführungen, und zwar für einen Untergurt 30, einen Obergurt 31 und einen Quergurt 32. Der Untergurt 30 besteht aus einem mehrfach abgewinkelten Profil mit zwei Enden 33, 34, die unter einem Winkel von 180° zueinander auslaufen. Dieser Untergurt 30 ist zum Einsetzen in die Aussparung 9 eines Stützfußes 8 vorgesehen und kann alternativ auch in einer halbrunden Ausführung gestaltet sein. Der Obergurt 31 ist trapezförmig ausgebildet und weist zwei auslaufende Schenkel 35, 36 auf, die eine gemeinsame Ebene aufspannen. Der Obergurt 31 ist zum Einsetzen in eine korrespondierende Ausnehmung der Quergurte 32 vorgesehen. Der Quergurt 32 weist bei diesem Ausführungsbeispiel ebenfalls eine Trapezform auf mit zwei auslaufenden Schenkeln 37, 38 und wird in einer vorhandenen Ausnehmung des Stützfußes 8 aufgenommen, wobei der Obergurt 32 über weitere Ausnehmungen, wie sie beispielweise aus der Figur 1 ersichtlich sind, verfügt, um die Obergurte 31, welche rechtwinklig zu den Quergurten 32 angeordnet sind, aufzunehmen.

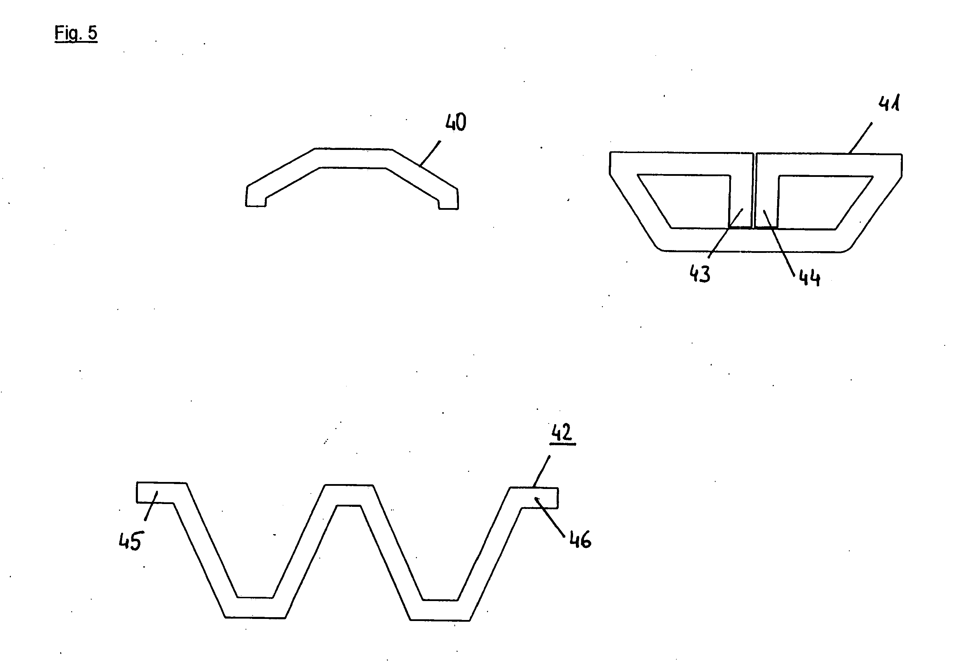

Figur 5 zeigt weitere alternative Ausführungsformen der Profile, und zwar in Form eines Untergurtes 40, eines Obergurtes 41 und einem Quergurt 42. Der Untergurt 40 ist mit dem Untergurt 30 aus Figur 4 identisch, während der Obergurt 41 eine trapezoiale Form aufweist, bei der die beiden Schenkelenden 43, 44 nach innen abgewinkelt sind und in ihrem Endbereich parallel verlaufend zueinander ausgerichtet sind. Der Obergurt 42 ist W-förmig ausgebildet, wobei die Schenkelenden 45, 46 in einer Ebene liegen, sodass sowohl der Obergurt 41 als auch der Quergurt 42 zu einer wesentlich verstärkten Profilausführung führen, um eine höhere Belastung der Transportfläche 1 zu gewährleisten.

## Patentansprüche

1. Transportpalette (1, 20), bestehend aus Längs-und Quergurten (3, 6, 10, 22, 23, 24, 30, 31, 32, 40, 41, 42), welche im Wesendlichen rechtwinklig zueinander angeordnet sind, wobei die Längsgurte (10, 22, 23, 30, 31, 40, 41) in Ausnehmungen der Quergurte (6, 24, 32, 42) einliegen und die Längs- und Quergurte (3, 6, 10, 22, 23, 224, 30, 31, 32, 40, 41, 42) in Aussparungen der Stützfüße (8) aufgenommen sind oder auf den Stützfüßen (8) aufliegen,
**dadurch gekennzeichnet,**
**dass** zumindest einige Längs- und Quergurte (3, 6, 10, 22, 23, 24, 30, 31, 32, 40, 41, 42) aus gepressten und/oder gerollten Pappprofilen bestehen.

2. Transportpalette nach Anspruch 1 oder 2,
**dadurch gekennzeichnet,**
**dass** die Pappprofile mit einer Kunststoffbeschichtung versehen sind und/oder dass die Pappprofile aus recycelten Materialien hergestellt sind.

3. Transportpalette nach Anspruch 1 oder 2,
**dadurch gekennzeichnet,**
**dass** die Längs- und Quergurte (3, 6, 10, 22, 23, 24, 30, 31, 32, 40, 41, 42) stapelbar ausgebildet sind und/oder dass die Längs- und Quergurte (3, 6, 10, 22, 23, 24, 30, 31, 32, 40, 41, 42) mehrfach abgewinkelt ausgeführt sind und/oder dass die Längs- und Quergurte (3, 6, 10, 22, 23, 24, 30, 31, 32, 40, 41, 42) zumindest teilweise in einer Ebene ausgerichtete Schenkelenden aufweisen.

4. Transportpalette nach einem der Ansprüche 1 bis 3,
**dadurch gekennzeichnet,**
**dass** die Längs- und Quergurte (3, 6, 10, 22, 23, 24, 30, 31, 32, 40, 41, 42) teilweise als Obergurte (3, 23, 31, 41) und teilweise als Untergurte (18, 22, 30, 44) ausgebildet sind, wobei die Obergurte (3, 23, 31, 41) trapezoidal ausgebildet sind und die Schenkelenden (43, 44) nach innen abgewinkelt parallel zueinander zu liegen kommen oder dass die Quergurte (6, 24, 32, 42) W-förmig ausgebildet sind, wobei die beiden Schenkelenden (45, 46) in einer Ebene liegend angeordnet sind.

5. Transportpalette nach einem der Ansprüche 1 bis 4,
**dadurch gekennzeichnet,**
**dass** die Untergurte (18, 22, 30, 40) mehrfach abgewinkelt oder halbrund ausgebildet sind.

6. Transportpalette nach einem der Ansprüche 1 bis 5,
**dadurch gekennzeichnet,**
**dass** die Profile beziehungsweise Längs- und Quergurte (3, 6, 10, 22, 23, 24, 30, 31, 32, 40, 41, 42) in zwei Vorzugsrichtungen ausgerichtet sind und diese beiden Vorzugsrichtungen nahezu rechtwinklig zueinander angeordnet sind.

7. Transportpalette nach einem der Ansprüche 1 bis 6,
**dadurch gekennzeichnet,**
**dass** die Stutzfüße (8) mindestens in einer Stirnfläche, vorzugsweise in beiden Stirnflächen mit zumindest einer Aussparung (9) versehen sind und/oder dass die Stützfüße (8) in der unteren Stirnfläche eine Aussparung (9) aufweisen, in welche die Untergurte (10, 22, 30, 40) vollständig bündig aufgenommen sind, während in der oberen Stirnfläche eine Aussparung vorhanden ist, die nur einen Teil der Profilhöhe aufnimmt.

8. Transportpalette nach einem der Ansprüche 1 bis 7,
**dadurch gekennzeichnet,**
**dass** die Stützfüße (8) in der oberen Stirnfläche eine Aussparung mit stehen gebliebenen Zapfen (12) aufweist und/oder dass die Obergurte (6, 24, 32, 42) seitlich zu den Ausnehmungen (7) versetzt liegende Durchbrüche (11) aufweisen.

9. Transportpalette nach einem der Ansprüche 1 bis 8,
**dadurch gekennzeichnet,**
**dass** die Zapfen (12) in den korrespondierenden Durchbrüchen (11) nach dem Zusammenfügen der gekreuzten Längs- und Quergurte (3, 6, 10, 22, 23, 24, 30, 31, 32, 40, 41, 42) einliegen.

10. Transportpalette nach einem der Ansprüche 1 bis 9,
**dadurch gekennzeichnet,**
**dass** die Längs- und Quergurte (3, 6, 10, 22, 23, 24, 30, 31, 32, 40, 41, 42) im Querschnitt eine Halbkreis-, Dreieck-, Rechteck- oder Trapezform aufweisen.

11. Transportpalette nach einem der Ansprüche 1 bis 10,
**dadurch gekennzeichnet,**
**dass** die Aussparungen (9) in den Stutzfüßen (8) und die Ausnehmungen (7) in den Quergurten (6, 24, 32, 42) an den Querschnitt der einliegenden Obergurte (3, 23, 31, 41) angepasst sind.

12. Transportpalette nach einem der Ansprüche 1 bis 11,
**dadurch gekennzeichnet,**
**dass** die Ausnehmungen der Quergurte (6, 32, 42) ebenfalls mit stehen gebliebenen Zapfen (26) ausgestattet sind, welche in korrespondierende Ausnehmungen (27) der senkrecht angeordneten Obergurte (23, 31, 41) eingreifen.

13. Transportpalette nach einem der Ansprüche 1 bis 12,
**dadurch gekennzeichnet,**
**dass** wenigstens ein Profil in Form eines Untergurts (10, 22, 30, 40) in den Aussparungen (9) der unteren Stirnfläche der Stützfüße (8) einliegt.

14. Transportpalette nach einem der Ansprüche 1 bis 13,
**dadurch gekennzeichnet,**
**dass** die Längs- und Quergurte (3, 6, 10, 22, 23, 24, 30, 31, 32, 40, 41, 42) teilweise aus extrudierten Kunststoffmaterialien hergestellt sind.

## Claims

1. Transport pallet (1, 20) consisting of longitudinal and transverse belts (3, 6, 10, 22, 23, 24, 30, 31, 32, 40, 41, 42) arranged essentially rectangular to each other, the longitudinal belts (10, 22, 23, 30, 31, 40, 41) lying in recesses of the transverse belts (6, 24, 32, 42), and the longitudinal and transverse belts (3, 6, 10, 22, 23, 24, 30, 31, 32, 40, 41, 42) being received in recesses of the support feet (8) or resting on the support feet (8),
**characterized in that**
at least some longitudinal and transverse belts (3, 6, 10, 22, 23, 24, 30, 31, 32, 40, 41, 42) consist of pressed and/or rolled-up cardboard profiles.

2. Transport pallet according to claim 1 or 2,
**characterized in that**
the cardboard profiles are provided with a plastic coating and/or the cardboard profiles are made of recycled materials.

3. Transport pallet according to claim 1 or 2,
**characterized in that**
the longitudinal and transverse belts (3, 6, 10, 22, 23, 24, 30, 31, 32, 40, 41, 42) are stackable designed and/or the longitudinal and transverse belts (3, 6, 1022, 23, 24, 30, 31, 32, 40, 41, 42) are designed to be multiply angled and/or the longitudinal and transverse belts (3, 6, 10, 22, 23, 24, 30, 31, 32, 40, 41, 42) comprise leg ends at least partially oriented in one plane.

4. Transport pallet according to one of claims 1 to 3,
**characterized in that**
the longitudinal and transverse belts (3, 6, 10, 22, 23, 24, 30, 31, 32, 40, 41, 42) are designed partially as upper belts (3, 23, 31, 41) and partially as lower belts (18, 22, 30, 40), wherein the upper belts (3, 23, 31, 41) have a trapezoidal design and the leg ends (43, 44) come to lie angled to the inside and in parallel to each other, or the transverse belts (6, 24, 32, 42) have a W-shaped design, wherein the two leg ends (45, 46) are arranged so as to lie in one plane.

5. Transport pallet according to one of claims 1 to 4,
**characterized in that**
the lower belts (18, 22, 30, 40) are designed to be multiply angled or semicircular.

6. Transport pallet according to one of claims 1 to 5,
**characterized in that**
the profiles respectively the longitudinal and transverse belts (3, 6, 10, 22, 23, 24, 30, 31, 32, 40, 41, 42), are oriented in two preferred directions and that these two preferred directions are arranged nearly rectangular to each other.

7. Transport pallet according to one of claims 1 to 6,
**characterized in that**
the support feet (8) are provided with at least one recess (9) in at least one front face, preferably in both front faces, and/or the support feet (8) comprise a recess (9) in the lower front face in which the lower belts (10, 22, 30, 40) are completely integrated and are flush, while a recess is provided in the upper front face which only receives a portion of the profile height.

8. Transport pallet according to one of claims 1 to 7,
**characterized in that**
the support feet (8) in the upper front face comprise a recess with a pivot (12) left standing in the recess, and/or the upper belts (6, 24, 32, 42) comprise openings (11) located laterally offset with respect to the recesses (7).

9. Transport pallet according to one of claims 1 to 8,
**characterized in that**
the pivots (12) are lying in the corresponding openings (11) after the crossed longitudinal and transverse belts (3, 6, 10, 22, 23, 24, 30, 31, 32, 40, 41, 42) have been joined.

10. Transport pallet according to one of claims 1 to 9,
**characterized in that**
the longitudinal and transverse belts (3, 6, 10, 22, 23, 24, 30, 31, 32, 40, 41, 42) have a semicircular, triangular, rectangular or trapezoidal cross-section.

11. Transport pallet according to one of claims 1 to 10,
**characterized in that**
the recesses (9) in the support feet (8) and the recesses (7) in the transverse belts (6, 24, 32, 42) are adapted to the cross-section of the upper belts (3, 23, 31, 41) lying therein.

12. Transport pallet according to one of claims 1 to 11,
**characterized in that**
the recesses of the transverse belts (6, 32, 42) are also equipped with remaining pivots (26) which engage in corresponding recesses (27) of the vertically arranged upper belts (23, 31, 41).

13. Transport pallet according to one of claims 1 to 12,
**characterized in that**
at least one profile in the form of a lower belt (10, 22, 30, 40) is lying in the recesses (9) of the lower front face of the support feet (8).

14. Transport pallet according to one of claims 1 to 13,
**characterized in that**
the longitudinal and transverse belts (3, 6, 10, 22, 23, 24, 30, 31, 32, 40, 41, 42) are partially made of extruded plastic materials.

## Revendications

1. Palette de transport (1, 20), constituée de semelles longitudinales et transversales (3, 6, 10, 22, 23, 24, 30, 31, 32, 40, 41, 42) disposées essentiellement perpendiculairement les unes par rapport aux autres, les semelles longitudinales (10, 22, 23, 30, 31, 40, 41) étant insérées dans des creux des semelles transversales (6, 24, 32, 42) et les semelles longitudinales et transversales (3, 6, 10, 22, 23, 24, 30, 31, 32, 40, 41, 42) étant logées dans des évidements des pieds d'appui (8) ou reposant sur les pieds d'appui (8),
**caractérisée par le fait qu'**au moins quelques semelles longitudinales et transversales (3, 6, 10, 22, 23, 24, 30, 31, 32, 40, 41, 42) sont constituées de profilés en carton pressé et/ou roulé.

2. Palette de transport selon la revendication 1 ou 2,
**caractérisée par le fait que** les profilés en carton sont dotés d'un revêtement en matière plastique et/ou que les profilés en carton sont fabriqués à partir de matériaux recyclés.

3. Palette de transport selon la revendication 1 ou 2,
**caractérisée par le fait que** les semelles longitudinales et transversales (3, 6, 10, 22, 23, 24, 30, 31, 32, 40, 41, 42) sont réalisées de manière empilable et/ou que les semelles longitudinales et transversales (3, 6, 10, 22, 23, 24, 30, 31, 32, 40, 41, 42) sont réalisées par pliages successifs et/ou que les semelles longitudinales et transversales (3, 6, 10, 22, 23, 24, 30, 31, 32, 40, 41, 42) présentent au moins partiellement des extrémités de montant dirigées dans un plan.

4. Palette de transport selon l'une des revendications 1 à 3,
**caractérisée par le fait que** les semelles longitudinales et transversales (3, 6, 10, 22, 23, 24, 30, 31, 32, 40, 41, 42) sont formées partiellement en tant que semelles supérieures (3, 23, 31, 41) et partiellement en tant que semelles inférieures (18, 22, 30, 40), les semelles supérieures (3, 23, 31, 41) étant formées de manière trapézoïdale et les extrémités de montant (43, 44) venant se poser repliées vers l'intérieur, parallèles les unes par rapport aux autres ou que les semelles transversales (6, 24, 32, 42) se présentent en forme de W, les deux extrémités de montant (45, 46) étant disposées en se trouvant dans un plan.

5. Palette de transport selon l'une des revendications 1 à 4,
**caractérisée par le fait que** les semelles inférieures (18, 22, 30, 40) sont pliées plusieurs fois ou se présentent sous forme semi-circulaire.

6. Palette de transport selon l'une des revendications 1 à 5,
**caractérisée par le fait que** les profilés ou les semelles longitudinales et transversales (3, 6, 10, 22, 23, 24, 30, 31, 32, 40, 41, 42) sont dirigés dans deux directions préférentielles et que ces deux directions préférentielles sont disposées presque perpendiculairement l'une par rapport à l'autre.

7. Palette de transport selon l'une des revendications 1 à 6,
**caractérisée par le fait que** les pieds d'appui (8) sont dotés, au moins dans une surface frontale, préférentiellement dans les deux surfaces frontales, au moins d'un évidement (9) et/ou que les pieds d'appui (8) présentent un évidement (9) dans la surface frontale inférieure, dans lequel les semelles inférieures (10, 22, 30, 40) sont entièrement reçus à fleur, tandis que dans la surface frontale supérieure un évidement est disponible, qui ne reçoit qu'une partie de la hauteur du profilé.

8. Palette de transport selon l'une des revendications 1 à 7,
**caractérisée par le fait que** les pieds d'appui (8) dans la surface frontale supérieure présentent un évidement avec des ergots restants (12) et/ou que les semelles supérieures (6, 24, 32, 42) présentent des orifices (11) se trouvant décalés latéralement par rapport aux creux (7).

9. Palette de transport selon l'une des revendications 1 à 8,
**caractérisée par le fait que** les ergots (12) sont logés dans les orifices (11) correspondants après l'assemblage des semelles longitudinales et transversales croisées (3, 6, 10, 22, 23, 24, 30, 31, 32, 40, 41, 42).

10. Palette de transport selon l'une des revendications 1 à 9,
**caractérisée par le fait que** les semelles longitudinales et transversales (3, 6, 10, 22, 23, 24, 30, 31, 32, 40, 41, 42) présentent en section une forme semi-circulaire, triangulaire, rectangle ou trapézoïdale.

11. Palette de transport selon l'une des revendications 1 à 10,
**caractérisée par le fait que** les évidements (9) dans les pieds d'appui (8) et les creux (7) dans les semelles transversales (6, 24, 32, 42) sont adaptés à la section des semelles supérieures insérées (3, 23, 31, 41).

12. Palette de transport selon l'une des revendications 1 à 11,
**caractérisée par le fait que** les creux des semelles transversales (6, 32, 42) sont également équipés d'ergots restants (26), qui s'engagent dans les creux (27) correspondants des semelles supérieures (23, 31, 41) disposées perpendiculairement.

13. Palette de transport selon l'une des revendications 1 à 12,
**caractérisée par le fait qu'**au moins un profilé sous la forme d'une semelle inférieure (10, 22, 30, 40) se loge dans les évidements (9) de la face frontale inférieure des pieds d'appui (8).

14. Palette de transport selon l'une des revendications 1 à 13,
**caractérisée par le fait que** les semelles longitudinales et transversales (3, 6, 10, 22, 23, 24, 30, 31, 32, 40, 41, 42) sont fabriquées partiellement à partir de matériaux extrudés en matière plastique.
